## Europäisches Patentamt
## European Patent Office
## Office européen des brevets

(19)

(11) Veröffentlichungsnummer : **0 030 361**
**B1**

(12)

# EUROPÄISCHE PATENTSCHRIFT

(45) Veröffentlichungstag der Patentschrift :
21.03.84

(51) Int. Cl.³ : **C 03 C 15/02**

(21) Anmeldenummer : **80107553.2**

(22) Anmeldetag : **03.12.80**

(54) Verfahren zum Schwefelsäure-Flußsäure-Polieren von Glasgegenständen.

(30) Priorität : **07.12.79 DE 2949383**

(43) Veröffentlichungstag der Anmeldung :
**17.06.81 Patentblatt 81/24**

(45) Bekanntmachung des Hinweises auf die Patenterteilung : **21.03.84 Patentblatt 84/12**

(84) Benannte Vertragsstaaten :
**AT BE FR GB IT SE**

(56) Entgegenhaltungen :

**Keine**

(73) Patentinhaber : **Sälzle, Erich, Dr.
Nadistrasse 8
D-8000 München 40 (DE)**

(72) Erfinder : **Sälzle, Erich, Dr.
Nadistrasse 8
D-8000 München 40 (DE)** .

(74) Vertreter : **Wuesthoff, Franz, Dr.-Ing. et al
Patentanwälte Wuesthoff -v. Pech-
mann-Behrens-Goetz Schweigerstrasse 2
D-8000 München 90 (DE)**

EP 0 030 361 B1

# Verfahren zum Schwefelsäure-Flußsäure-Polieren von Glasgegenständen

Die Anwendung des erfindungsgemäßen Verfahrens liegt in der Glasindustrie, wobei die rohen, gepreßten oder geschliffenen Gegenstände oberflächlich poliert werden, um ihnen den erforderlichen Glanz zu verleihen.

Es ist bekannt, Glasgegenstände — und zwar sowohl Preßglas als auch geschliffene Glasgegenstände — auf chemischem Wege zu polieren, wobei ein Flußsäure und Schwefelsäure enthaltendes Polierbad angewandt wird. Durch die beim Säure-Polieren stattfindenden Reaktionen mit den Glasbestandteilen der Oberfläche der Gegenstände bildet sich auf dieser eine festhaftende Schicht aus Reaktionsprodukten. Diese Reaktionsprodukte sind im allgemeinen Sulfate, Bisulfate, Fluoride und Silicofluoride der in den Gläsern enthaltenen Kationen. Diese Schicht an Reaktionsprodukten behindert den Poliervorgang, also die Einwirkung der Poliersäuren auf die Glasoberfläche, bis diese Reaktionen vollständig zum Stillstand kommen. Es war daher bisher immer erforderlich, diese Schicht aus Reaktionsprodukten des Poliervorgangs von der Glasoberfläche abzulösen, um das Polieren fortsetzen zu können. Dazu wurde das Polieren unterbrochen und der Überzug abgewaschen und dies viele Malewiederholt, bis der angestrebte Poliergrad erreicht war. Zum Abwaschen des Polierbelags wurde früher Wasser angewandt, was aber zu großen Nachteilen führte, weil durch das abwechselnde Polieren und Waschen große Wassermengen in das Polierbad geschleppt werden, die dieses damit verdünnen, und andererseits Waschwässer mit solchen Säuregehalten anfallen, daß dies nicht nur zu einem ungebührlichen Säureverbrauch sondern auch zu schwerwiegenden Problemen führt, weil ja diese sauren Waschwässer, bevor sie in die Flüsse abgelassen werden können, in aufwendiger Weise neutralisiert werden müssen.

Nach der DE-C1185 780 wurde eine Schwefelsäurelösung solcher Konzentration, daß sie wasserentziehend ist, als Waschbad angewandt, so daß nur die fertig polierten Glasgegenstände mit Wasser abgespült werden mußten. Aber auch bei diesem Polierverfahren mit einem Schwefelsäure-Waschbad war es erforderlich, die zu polierenden Glasgegenstände wiederholte Male, also in der Größenordnung von 10 bis 15 mal, während relativ kurzen Tauchzeiten abwechselnd in das Polierbad und in das Waschbad zu tauchen.

Aus der DE-B-14 96 666 ist es bekannt, das Polierbad unter der Sättigungskonzentration für Kieselfluorwasserstoffsäure zu halten, indem man einen Teil des Polierbades austrägt und verwirft und den gleichen Volumenanteil durch frische Poliersäure ersetzt bzw. den Fluorwasserstoffgehalt der Poliersäure durch Einleiten von gasförmigem Fluorwasserstoff entsprechend anhebt. Eine Entfernung von gelösten Natrium- und Kaliumionen aus der Poliersäure wird auf diese Weise jedoch weder angestrebt noch erreicht.

Aus der DE-A-14 96 654 ist ein Verfahren zum Polieren von Glasgegenständen in einem Polierbad aus Schwefelsäure und Flußsäure bekannt, bei dem zur Ablösung des bei der Polierreaktion gebildeten Salzbelags von den Glasoberflächen Schwingungsenergie, insbesondere in Form von Ultraschall, zur Einwirkung gebracht wird. Da mit Fortschreiten des Poliervorgangs sich die dabei gebildeten Polierprodukte in der Badflüssigkeit anreichern, diese damit übersättigt wird und es schließlich zum Aussalzen dieser Verbindungen unter Bildung eines an den Glasflächen festhaftenden schwer entfernbaren und die Polierreaktion beeinträchtigenden Niederschlagskommt, ist es erforderlich, den Poliergang von Zeit zu Zeit zu unterbrechen, das Polierbad von etwa 50 bis 60 °C stark abzukühlen, insbesondere auf −10 °C, und gleichzeitig Impfkristalle zuzusetzen, um Natrium- und Kaliumsilicofluorid durch Reaktion der Natrium- und/oder Kaliumionen mit dem im Bad vorhandenen Siliciumtetrafluorid auszufällen. Nachteilig an dieser Entfernung der im Polierbad enthaltenen Salze und Ionen ist die Notwendigkeit des Unterbrechens des Poliervorgangs, des Abkühlens der Polierflüssigkeit von der Arbeitstemperatur auf eine tiefe Temperatur, ja sogar unter 0 °C und die Notwendigkeit der Einbringung von Impfkristallen.

Gegenstand der DE-A-19 35 814 ist das Säure-Polieren von Bleikristall-Gläsern oder Kristallgläsern in einem Schwefelsäure und Flußsäure enthaltenden Polierbad, welches nach diesem Stand der Technik zusätzlich Gelatine, Knochenleim oder andere leimartige Stoffe enthält. Durch diese Zusätze zu dem Polierbad sollen Salzablagerungen auf der Glasoberfläche, die die Polierwirkung des Bades behindern könnten, verhindert werden (sh. DE-A-19 35 814 Seite 2, 4. Absatz). Da das Polierbad während des Polierens dauernd seine Zusammensetzung verändert, muß es hinsichtlich der Schwefelsäure- und Flußsäure-Konzentration öfters aufgefrischt werden. Da schließlich die Polierreaktionen auf einer Auflösung von Glasbestandteilen (Oxiden und Silicaten von Alkali- und Erdalkalimetallen und Blei) beruhen, wird mit der Zeit in dem nicht erneuerten sondern immer wieder aufgefrischten Polierbad die Sättigungs-Konzentration an Salzen obiger Metalle (Sulfate, Bisulfate, Fluoride, Silicofluoride) überschritten und diese Salze fallen als feines Pulver aus und scheiden sich als Schlamm am Boden des Poliertrogs ab. Eine Entfernung lediglich der Alkaliionen wird weder angestrebt noch erreicht. Es muß dieser Salzschlamm von Zeit zu Zeit entfernt also das Polierbad entsalzt, werden.

Aufgabe der Erfindung ist es nun, diese vielfache Wechselbehandlung in Polier- und Waschbad ganz oder weitgehend zu vermeiden oder mit anderen Worten ein Verfahren zu bringen, welches gestattet, in einem einzigen oder höchstens in zwei oder drei Tauchvorgängen den gewünschten Poliergrad zu erreichen.

Die Erfindung geht aus von einem Verfahren zum Polieren von Glasgegenständen in einem Polierbad — enthaltend Schwefelsäure und Flußsäure — und Abspülen der fertig polierten Gegenstände in einem Schwefelsäure- und/oder Wasser-Waschbad, wobei Natrium- und/oder Kaliumsalze aus dem Polierbad entfernt werden.

Die gestellte Aufgabe wird erfindungsgemäß dadurch gelöst, daß man aus dem Polierbad während dessen Betrieb kontinuierlich, absatzweise oder von Zeit zu Zeit die gelösten Natrium- und/oder Kaliumionen — jedoch ohne die im Bad enthaltenen Silicofluorid-, Fluorid- oder Sulfationen — entfernt.

Es hat sich nämlich überraschender Weise gezeigt, daß durch die Entfernung der Natrium- und/oder Kaliumionen aus dem Polierbad die Polierzeit bei einem einzelnen Tauchvorgang wesentlich verlängert werden kann, d. h. die Wechselbehandlung auf wenige Male eingeschränkt werden kann oder es sogar auch möglich ist, mit einem einzigen Polier- und Waschvorgang die angestrebte Oberflächengüte zu erreichen.

Für das erfindungsgemäße Verfahren wird wie üblich ein Polierbad angewendet, welches neben Schwefelsäure auch Flußsäure enthält. Poliert wird meistens bei erhöhter Temperatur, und zwar bis etwa 70 °C, vorzugsweise zwischen 40 und 60 °C, je nach Zusammensetzung des Polierbades. Im allgemeinen liegt die Schwefelsäure-Konzentration im Polierbad zwischen 52 und 63 % $H_2SO_4$ oder darüber und die HF-Konzentration zwischen 3 und 10 %. Die exakte Zusammensetzung und Temperatur der Poliersäure hängt weitgehend von der Zusammensetzung des Glases, aus dem die zu polierenden Gegenstände herzustellen sind, ab.

Wie oben bereits erwähnt, hat es sich zur Verringerung der Anzahl der Tauchvorgänge der zu polierenden Gegenstände in das Polierbad und zur Verringerung der jeweiligen Tauchzeit als zweckmäßig erwiesen, den sich auf den zu polierenden Gegenständen während des Poliervorgangs aufgrund der Polierreaktion bildenden Belag nicht mit Wasser abzuwaschen, sondern mit einem Schwefelsäure-Waschbad. Die Schwefelsäure-Konzentration in einem solchen Waschbad soll so hoch sein, daß sie wasserentziehend wirkt, d. h. > 67 % $H_2SO_4$. Dadurch wird der gebildete Salzbelag porös, bröselig bzw. abgesprengt, da die Schwefelsäure den Salzen ihren Wassergehalt entzieht und damit die Struktur des Belages wesentlich zu verändern vermag. Man wird somit zweckmäßigerweise eine Schwefelsäure mit einer Konzentration von 68 bis etwa 72 % $H_2SO_4$ anwenden. Auch das Schwefelsäure-Waschbad soll erhöhte Temperatur besitzen, wobei bevorzugt eine Temperatur zwischen 55 und 65 °C eingehalten wird.

Ist nach einer gewissen Anzahl von Wechselbehandlungen, d. h. Tauchen in das Polierbad und Entfernen des dabei gebildeten Belags im Schwefelsäure-Waschbad, der angestrebte Poliergrad erreicht, so wird das fertig polierte Gut letztlich mit Wasser säurefrei gewaschen und getrocknet.

Das häufige Versetzen der mit dem Poliergut beladenen Körbe aus dem Polierbad in das Schwefelsäurebad und wieder zurück und schließlich in das abschließende Wasserbad vor dem Trocknen erfordert nicht nur viel Zeit sondern auch viel Manipulationsarbeit und ist daher sehr arbeitsintensiv und somit kostspielig.

Beim Poliervorgang in einer Flußsäure-haltigen Schwefelsäure werden die oberflächlichen Glasbestandteile abgelöst. Dabei gehen die Alkaliionen vorerst in Lösung, jedoch scheiden sie sich nach Sättigung des Polierbades mit Alkaliionen als Bisulfate zusammen mit Fluoriden und Silicofluoriden in Form eines und den Glasflächen fest haftenden Niederschlages aus. Werden nun aus dem Polierbad die Alkaliionen auf irgendeine Weise entfernt, so ist dieses wieder in der Lage, Alkaliionen aus den Glasbestandteilen in Lösung zu halten, womit die Abscheidung der Alkalibisulfate zurückgedrängt bzw. verzögert wird. Die noch auftretenden Abscheidungen an Fluoriden und Silicofluoriden aus der Polierreaktion, gegebenenfalls mit einem gewissen Anteil an Sulfaten, sind jedoch nicht mehr fest haftend — wie die bisherigen Alkalibisulfate in großem Umfang enthaltenen Schichten — und lassen sich im allgemeinen durch Bewegung der Glasgegenstände innerhalb des Polierbades abspülen.

Die Entfernung der Natrium- und/oder Kaliumionen aus dem Polierbad kann erfindungsgemäß auf verschiedene Weise stattfinden. Besonders vorteilhaft ist die Ausfällung mit Silicofluorwasserstoffsäure, da die Natrium-bzw. Kaliumsilicofluoride in dem Polierbad sehr schwer löslich sind. Diese Ausfällung mit Silicofluorwasserstoffsäure kann kontinuierlich, absatzweise oder von Zeit zu Zeit erfolgen. Die ausgefällten Silicofluoride werden dann durch Umpumpen des Polierbades über ein Filter von diesem getrennt. Die Art des dafür angewandten Filters ist ohne Belang. Man kann dafür übliche Nutschen, aber auch Trommelfilter und Filterpressen heranziehen. Der Filterkuchen, also die ausgefällten Alkalisilicofluoride können einer Weiterverwendung zugeführt werden, während das Filtrat, also das gereinigte Polierbad wieder in den Poliertrog rückgeführt wird. Die anzuwendende Menge an Silicofluorwasserstoffsäure hängt von der Gesamtmenge der Natrium- und Kaliumionen, in dem zur Ausfällung anstehenden Volumen des Polierbades ab. Diese Menge an Silicofluorwasserstoffsäure errechnet sich in einfacher Weise aus den Sättigungs-Konzentrationen von Natrium und/oder Kalium in Form ihrer Bisulfate, Fluoride oder Silicofluoride bzw. läßt sich durch einfache Vorversuche ermitteln.

Diese Ausfällung der Alkalisilicofluoride wird durch einen geringen Zusatz an Phosphorsäure und/oder Essigsäure zu dem Polierbad begünstigt.

Es ist auch möglich, dem Polierbad in geringem Umfang komplexbildende organische Säuren wie Oxalsäure, Weinsäure oder Malonsäure zuzusetzen, wodurch mehr Alkaliionen im Polierbad in Lösung gehalten werden können und somit die Ausfällung mit geringeren Mengen an Silicofluorwasserstoffsäure bzw. in größeren Abständen vorgenommen werden kann. Außer den oben genannten komplexbildenden Säuren eignen sich auch andere Chelatbildner für Natrium und Kalium vorausgesetzt, daß sie den stark sauren Umgebungsbedindungen zu widerstehen vermögen. Beispiele dafür sind 1,2,3-Triaminopropan, Alanin, Glycin, Aminobarbitursäure,N, N-diessigsäure, Nitrilotriessigsäure, 2-Sulfoanilindiessigsäure, Äthylendiamintetraessigsäure sowie die verschiedenen kondensierten Phosphorsäuren wie Pyrophosphorsäure, Tetramethaphosphorsäure, Trimethaphosphorsäure, Tripolyphosphorsäure und weitere auf dem gleichen Prinzip wirkende Stoffe.

Eine weitere Möglichkeit zur Entfernung der Alkaliionen aus dem Polierbad besteht darin, daß man dieses in einem Nebenkreis oder von Zeit zu Zeit durch eine Quecksilber-Elektrolysezelle leitet, in der die Quecksilberkathode durch Amalgambildung Natrium und Kalium aufnimmt. Das Amalgam wird wie übliche aufgearbeitet. Die unter der hohen Wasserstoff-Überspannung an der Quecksilberkathode abgeschiedenen Alkalimetalle, Natrium und/oder Kalium, lösen sich in Quecksilber unter Bildung flüssiger Amalgame ; diese werden üblicherweise in einem Zersetzer mit Wasser behandelt, wodurch Alkalilauge und Wasserstoff entstehen und das Quecksilber für die neuerliche Elektrolyse regeneriert wird.

Die elektrolytische bzw. elektrodialytische Entfernung der Alkaliionen aus dem Polierbad ist auch in einer Membran-Elektrolysezelle möglich, wobei die Alkaliionen aus dem Polierbad durch eine semipermeable Membran in den Katholyt wandern. Für derartige elektrolytische oder elektrodialytische Verfahren werden Membranen aus einem Material angewandt, welches selektiv permeabel nur für Kationen, also in diesem Fall für Natrium und oder Kalium, ist. Kationen-Austausch-Membranen sind für die Elektrolyse und Elektrodialyse in der Technik allgemein bekannt. Das Austauscher-Material kann beispielsweise ein Harz auf der Basis von Phenolformaldehyd mit austauschenden seitlich hängenden Sulfonsäuregruppen sein oder auch die bekannten Austauscher-Materialien auf der Basis eines Styrolharzes mit Sulfonsäure-Austauscher-Gruppen, entsprechend den Handelsprodukten « Amberlite » und « Dowex », die wohl die bekanntesten sind. Auch Acrylsäureharze mit der Carbonsäuregruppe als Austauschergruppe sowie Vinylharze mit Sulfonsäure-Austauschergruppe kommen hier in Frage. Schließlich eignen sich selbstverständlich auch die neu entwickelten perfluorierten Homo- und Copolymeren des Äthylens mit seitlich hängenden Sulfon- oder Carbonsäuregrüppen und ähnlich wirksame Stoffe. Als Katholyt eignet sich beispielsweise eine Schwefelsäurelösung, aus der dann das Alkalisulfat auskristallisiert und die Säure zum Polieren rückgeführt wird oder die irgend einer anderen Verwertung zugeführt werden kann.

Schließlich ist es auch möglich, die Entfernung der Alkaliionen aus dem Polierbad mit Hilfe von Ionenaustauschern vorzunehmen, wobei es sich um polymere Produkte in der Säureform oder um zeolithartige Molekularsiebe oder dergleichen handeln kann. Die Ionen-Austauscher-Materialien werden in diesem Fall in einer Säule gehalten und das von den Alkaliionen zu befreiende Polierbad durch diese Schüttung von Ionenaustauschern geleitet. An den Ionenaustauschern werden die Alkaliionen festgehalten und das regenerierte Polierbad kann dann wieder in den Poliertrog rückgeführt werden. Als anorganische polymere Kationen-Austauscher kommen Produkte in Frage, wie sie oben bereits für die Membran-Materialien aufgezählt worden sind. Darüberhinaus eignen sich auch anorganische ionenaustauschende Stoffe in der Art der Permutite und Zeolithe, das sind Aluminosilicate unterschiedlicher Zusammensetzung, die ihre kationischen Teile gegen Natrium oder Kalium auszutauschen vermögen bzw. in der Art von Molekularsieben arbeiten, d. h. die Kationen nicht durch ihre skelettartige Molekülstruktur durchzulassen.

Ein weiterer Vorteil des erfindungsgemäßen Verfahrens liegt darin, daß die Schwefelsäure-Konzentration in dem Polierbad nicht streng — wie bisher — zwischen 50 und 60 % $H_2SO_4$ gehalten werden muß, sondern daß der Schwefelsäuregehalt zwischen etwa 40 und 75 % liegen kann, wodurch der Polierbetrieb erleichtert und der Schwefelsäureverbrauch verringert werden kann.

Die für die erste Verfahrensvariante benötigte Silicofluorwasserstoffsäure kann an Ort und Stelle erzeugt werden. Bekanntlich entsteht bei dem Poliervorgang Siliciumtetrafluorid, welches zusammen mit Fluorwasserstoff aus dem Polierbad entweicht, von dort abgesaugt und in einer Gaswäsche von Wasser aufgenommen wird ; die so gebildete Silicofluorwasserstoffsäure — gegebenenfalls nach Konzentrieren auf den gewünschten Wert — kann nun zur Ausfällung der Alkaliionen herangezogen werden. Damit ist auch die Notwendigkeit einer Neutralisierung der Waschwässer aus der Gaswäsche eliminiert und die beim Poliervorgang verbrauchte Flußsäure als Fällmittel nutzbar gemacht.

Schließlich ermöglicht die Abscheidung der Alkalien eine einfache und sichere Überwachung und Regelung der Zusammensetzung des Polierbades. Unter der Voraussetzung, daß die Dichte des Polierbades konstant gehalten wird, läßt sich die Flußsäure-Konzentration im Polierbad durch Leitfähigkeitsmessungen bestimmen (Genauigkeit ± 10 %) und die Leitfähigkeit als Regelgröße für die Auffrischung des Polierbades mit Flußsäure heranziehen. Auf diesem Prinzip läßt sich eine automatische Steuerung des Poliervorgangs aufbauen. Bei dieser automatischen Steuerung des Poliervorgangs unter der Voraussetzung konstanter Dichte des Polierbades durch Einhaltung im wesentlichen konstanter Zusammensetzung wird in üblicher Weise die Leitfähigkeit des Polierbades entweder kontinuierlich registriert oder von Zeit zu Zeit die Leitfähigkeitswert ermittelt. Erreicht nun die Leitfähigkeit des Polierbades einen bestimmten Grenzwert, der einer bestimmten Grenzkonzentration der Flußsäure innerhalb des Bades entspricht, wird automatisch die Zuspeisung von Flußsäure betätigt und zwar so lang, bis die Konzentration en Flußsäure im Polierbad und damit dessen Leitfähigkeit einen zweiten Grenzwert erreicht hat.

Die Erfindung wird anhand folgender Beispiele weiter erläutert.

Beispiel 1

Es waren Glasgegenstände aus Bleikristall mit ca. 30 % PbO zu polieren. Als Polierbad diente eine Lösung von 45 Gew.-% $H_2SO_4$ und 2,5 Gew.-% HF mit einer Temperatur von etwa 50 °C. Diesem Polierbad wurde laufend so viel 35 %-ige $H_2SiF_6$ zugesetzt, als dem Alkaligehalt der beim Polieren aufgelösten Glasbestandteile entspricht. Dabei soll der Überschuß an Silicofluorwasserstoffsäure 1 % nicht übersteigen.

Gespült wurde in einer 66 bis 76 %-igen Schwefelsäure von etwa 70 °C. Es war nur eine dreimalige Wechselbehandlung erforderlich und der gesamte Poliervorgang war in 12 min beendet.

Beispiel 2

Es waren gepreßte Teller aus Bleikristall mit 24 % PbO zu polieren. Das Polierbad enthielt 65 Gew.-% $H_2SO_4$ und 6 Gew.-% HF und hatte eine Temperatur von 55 °C. Nach 10 min war der Poliervorgang beendet.

Nach drei Chargen wurde dem Polierbad soviel Silicofluorwasserstoffsäure zugesetzt, daß ein 0,5 %-iger Überschuß and $H_2SiF_6$ bestand. Die ausgefallenen Natrium- und/oder Kaliumsilicofluoride wurden am Ende jeder Schicht vom Polierbad getrennt.

Beispiel 3

Es waren Kelchgläser aus Bleikristall mit 24 % PbO, die einen sehr rauhen Diamantschliff aufwiesen, zu polieren. Das Polierbad enthielt 45 Gew.-% $H_2SO_4$, 0,8 Gew.-% HF und 1 Vol-% $H_3PO_4$ (85 %-ig). Durch ein einmaliges Tauchen war der Poliervorgang in 14 min beendet. Nach drei Chargen erfolgte die Ausfällung der Alkalisilicofluoride mit Silicofluorwasserstoffsäure.

Beispiel 4

Es waren Preßglas-Schalen zu polieren. Das Polierbad enthielt 55 Gew.-% $H_2SO_4$, 2,5 Gew.-% HF und 0,3 Vol-% $H_3PO_4$. Als Waschbad diente eine 75 %-ige Schwefelsäure von 75 °C. In zwei Tauchvorgängen in das Polier- und Waschbad war nach insgesamt 9 min der angestrebte Poliergrad erreicht. Die Ausfällung der Alkalisilicofluoride erfolgte, indem im Polierbad immer ein geringer Überschuß an benötigter Silicofluorwasserstoffsäure aufrechterhalten wurde.

Beispiel 5

Es waren Whiskybecher mit Diamantschliff zu polieren. Das Polierbad enthielt 65 Gew.-% $H_2SO_4$, 1,8 Gew.-% HF und 0,4 Gew.-% Weinsäure und hatte eine Temperatur von 50 °C. In einem einmaligen Tauchvorgang von 18 min war der erforderliche Poliergrad erreicht. Nach 10 Chargen wurden durch Zugabe von Silicofluorwasserstoffsäure die Silicofluoride ausgefällt und vom Polierbad getrennt.

Beispiel 6

Es waren gepreßte Schälchen aus Bleikristall mit 24 % PbO zu polieren. Das Polierbad enthielt 70 Gew.-% $H_2SO_4$, 3 Gew.-% HF und 0,3 Gew.-% Oxalsäure und hatte eine Temperatur von 60 °C. Nach einem einmaligen Tauchvorgang in 12 min war der angestrebte Poliergrad erreicht. Nach 10 bis 15 Chargen wurden aus dem Polierbad mit Hilfe von Silicofluorwasserstoffsäure die Silicofluoride der Alkalien ausgefällt und abgeschieden.

Beispiel 7

Es waren handgeschliffene Schalen aus Bleikristall mit 24 % PbO zu polieren. Das Polierbad enthielt 70 Gew.-% $H_2SO_4$ und 6 % HF und hatte eine Temperatur von 55 °C. Als Waschbad diente eine 75 %-ige Schwefelsäurelösung von 75 °C. Nach zweimaliger Tauch- und Waschbehandlung war nach insgesamt 8 min der angestrebte Poliergrad erreicht. Das Polierbad wurde von Zeit zu Zeit einer Quecksilber-Elektrolysezelle zugeführt, darin von den gelösten Alkalien befreit und zum Polieren der nächsten Charge rückgeleitet.

Beispiel 8

Es sollten Weingläser in einem Polierbad enthaltend 65 Gew.-% $H_2SO_4$ und 1,5 % HF bei 45 °C poliert werden. Das Polierbad wurde aus dem Poliertrog dauernd durch eine Elektrolysezelle und von dieser wieder in den Poliertrog umgepumpt. Die Elektrolysezelle enthielt zwischen den Elektrodenkammern eine semipermeable Membran, welche nur den Durchtritt der Alkaliionen gestattete. Das Polierbad wurde in die Anodenkammer eingeführt und als Katholyt eine Schwefelsäurelösung angewandt. Durch die Elektrolyse wanderten die Alkalionen aus der Anodenkammer in die Kathodenkammer und bildeten dort Alkalisulfat. Bei Erreichen der Sättigungskonzentration der Sulfate im Katholyt wurden diese unter Abkühlen auskristallisiert. Mit Hilfe dieser Elektrolyse ließ sich die Alkalikonzentration in dem Polierbad während langer Zeit konstant halten. Bei dieser Verfahrensweise benötigte man eine Polierzeit von 15 min. In dem Polierbad mit konstanter Dichte läßt sich die Leitfähigkeit als Regelgröße für die Zuspeisung von Flußsäure in das Polierbad anwenden.

Beispiel 9

Poliert wurden durch Schleuderguß erhaltene und nachgeschliffene Vasen aus Bleikristall mit 30 % PbO, und zwar in einem Polierbad enthaltend 45 Gew.-% H$_2$SO$_4$ und 1,5 Gew.-% HF bei 50 °C. Aus dem Poliertrog wurde kontinuierlich über einen Nebenkreis Polierbad über ein Vorfilter in eine Kolonne geleitet, welche einen Zeolith in der H$^+$-Form als Kationenaustauscher enthielt. Nach Entfernen der Alkaliionen aus dem Polierbad wurde dieses wieder in den Poliertrog rückgeleitet. Die Glasgegenstände wurden in drei Wechselbehandlungen unter Anwendung eines Schwefelsäure-Waschbads innerhalb von 8 min poliert. In der Kolonne erwies sich auch ein organischer Kationenaustauscher mit Sulfonsäuregruppen in gleicher Weise brauchbar. Nach einiger Zeit kann der Ionenaustauscher in üblicher Weise regeneriert werden.

## Ansprüche

1. Verfahren zum Polieren von Glasgegenständen in einem Polierbad-enthaltend Schwefelsäure und Flußsäure- und Abspülen der fertig polierten Gegenstände in einem Schwefelsäure- und/oder Wasser-Waschbad, wobei Natrium- und/oder Kaliumsalze aus dem Polierbad entfernt werden, dadurch gekennzeichnet, daß man aus dem Polierbad während dessen Betrieb kontinuierlich, absatzweise oder von Zeit zu Zeit die gelösten Natrium- und/oder Kaliumionen — jedoch ohne die im Bad enthaltenen Silicofluorid-, Fluorid- oder Sulfationen — entfernt.

2. Verfahren nach Anspruch 1, dadurch gekennzeichnet, daß man die Entfernung der Natrium- und/oder Kaliumionen aus dem Polierbad durch Zugabe von Silicofluorwasserstoffsäure und Abtrennung der ausgefällten Natrium-bzw. Kaliumsilicofluoride vornimmt.

3. Verfahren nach Anspruch 2, dadurch gekennzeichnet, daß man zusätzlich Phosphor- und/oder Essigsäure in das Polierbad einbringt.

4. Verfahren nach Anspruch 2 oder 3, dadurch gekennzeichnet, daß man zusätzlich Malonsäure, Oxalsäure oder Weinsäure in das Polierbad einbringt.

5. Verfahren nach Anspruch 1, dadurch gekennzeichnet, daß man die Natrium- und/oder Kaliumionen durch Elektrolyse in einer Quecksilberzelle oder in einer Zelle mit einer kationensemipermeablen Membran aus dem Polierbad entfernt.

6. Verfahren nach Anspruch 1, dadurch gekennzeichnet, daß man die Natrium- und/oder Kaliumionen mit Hilfe eines Kationenaustauschers aus dem Polierbad entfernt.

## Claims

1. A method of polishing glass articles in a polishing bath contining sulfuric acid and hydrofluoric acid and rinsing the finally polished articles in a washing bath of sulphuric acid and/or water, wherein sodium and/or potassium salts are removed from the polishing bath characterized in that during the polishing bath operating time the dissolved sodium and/or potassium ions — but not the fluorosilicic ions, fluoride ions or sulfate ions — are removed continuously, intermittently or from time to time.

2. The method as claimed in claim 1 characterized in that the removal of the sodium and/or potassium ions from the polishing bath is effected by the addition of fluorosilicic acid and discharging the precipitated sodium and potassiumsilicofluorides, respectively.

3. The method as claimed in claim 2 characterized in that additionally phosphoric and/or acetic acid is added to the polishing bath.

4. The method as claimed in claim 2 or claim 3 characterized in that additionally malonic acid, oxalic acid or tartaric acid is added to the polishing bath.

5. The method as claimed in claim 1 characterized in that the sodium and/or potassium ions are removed from the polishing bath by electrolysis in a mercury cell or in a cell with a cation semipermeable membrane.

6. The method as claimed in claim 1 characterized in that the sodium and/or potassium ions are removed from the polishing bath with the aid of a cation exchanger.

## Revendications

1. Procédé de polissage d'objets en verre dans un bain de polissage contenant de l'acide sulfurique et de l'acide fluorhydrique et de lavage des objets dont le polissage est fini dans un bain de lavage d'acide sulfurique et/ou d'eau, des sels de sodium et/ou de potassium étant éliminés du bain de polissage, caractérisé en ce qu'on élimine continuellement, charge par charge ou de temps en temps du bain de polissage pendant son fonctionnement les ions sodium et/ou potassium, mais pas les ions fluosilicates, fluorures ou sulfates contenus dans le bain.

2. Procédé suivant la revendication 1, caractérisé en ce qu'on élimine du bain de polissage les ions sodium et/ou potassium par addition d'acide fluosilicique et séparation des fluosilicates de sodium et/ou de potassium précipités.

3. Procédé suivant la revendication 2, caractérisé en ce qu'on introduit en plus dans le bain de polissage de l'acide phosphorique et/ou acétique.

4. Procédé suivant l'une des revendications 2 et 3, caractérisé en ce qu'on introduit en plus dans le bain de polissage de l'acide malonique, de l'acide oxalique ou de l'acide tartrique droit.

5. Procédé suivant la revendication 1, caractérisé en ce qu'on élimine du bain de polissage les ions sodium et/ou potassium par électrolyse dans une cellule à mercure ou dans une cellule ayant une membrane semi-perméable aux cations.

6. Procédé suivant la revendication 1, caractérisé en ce qu'on élimine du bain de polissage les ions sodium et/ou potassium à l'aide d'un échangeur de cations.